# EUROPEAN PATENT APPLICATION

(11) **EP 1 382 441 A1**
(43) Date of publication of application: **21.01.2004**
(21) Application number: 03077198.4
(22) Date of filing: 11.07.2003
(51) Int. Cl.: B32B 17/10, B65G 49/06

(54) **A process for the automated assembling of composite glasses and an automated apparatus therefor**

(30) Priority: 12.07.2002 IT RM20020377
(71) Applicant: ABB Service S.r.l., 20135 Milano (IT)
(72) Inventor: Mazzocchi, Enrico, 20135 Milano (IT)
(74) Representative: Leone, Mario

(57) **Abstract**

A method and an apparatus for the totally automatic assembling of composite glasses. The apparatus is characterised in that it comprises a station for feeding a pair of glass panes; a station for the calibrated positioning of said glass panes according to a reference station; a station for feeding a sheet of plastic material on said glass panes; a station for assembling said composite glass, in which said sheet of plastic material is positioned in calibrated fashion between said glass panes in a sandwich arrangement; and a station for cutting the excess plastic material from the sheet from the peripheral edges of said composite glass thus assembled.

## Description

The present invention relates to a method and a compact sized apparatus for the assembly of composite glasses such as windshields for vehicles or the like.

A typical automobile windshield is a composite glass pane, made up of two thin glass panes, usually called "inner glass", intended for the interior of the automobile, and "outer glass", joined together by means of an intermediate layer of plastic material such as Polyvinylbutyral

(PVB). The industrial manufacturing process requires said components to be mounted under the precise and restrictive prescriptions of current regulations, both relating to the product in itself and to environmental conditions.

A first disadvantage for the mounting of such components is linked to the type of work which is extremely challenging, because the efficiency it requires is based on critical parameters with very low tolerance and this implies vast investments for industry. Moreover, excluding just a few cases, to date there is another disadvantage associated with the process for mounting said composite glasses, given by the fact that they are to be mounted mainly by hand in production lines, entailing an excessive burden in terms of time, specialised labour and costs.

The method and the apparatus of the present invention is aimed at solving the aforesaid drawbacks, because it was designed for the automobile glass industry, thereby providing the most advanced technology for the automated assembly of laminated windshields.

Therefore, the present invention provides a method for assembling a composite glass which is characterised in that it comprises the steps set out in the characterising part of claim 1. The present invention also provides an apparatus characterised by the operative stations as set out in the characterising part of claim 5.

Advantageously, the related configuration of the apparatus of the present invention allows to carry out all the main steps of the assembling process, with the smallest bulk ever achieved heretofore. According to the present invention, the feeding and arrangement of the "inner glass" and of the "outer glass", their relative squaring, the subsequent feeding of a stack of detachable Polyvinylbutyral (PVB), their arrangement and sandwich mounting, the assembly and the final cut of the excess vinyl around the glass edge, all is provided automatically in more ore less 25 m² of floor space.

Moreover, according to the method and apparatus of the present invention, the high output rate (up to 5 windshields per minute) allows to combine the apparatus of the present invention to nearly all fast windshield production lines in the world.

According to the present invention, a method and a device are provided which comprise a compact system for assembling glasses starting from the separate feeding and subsequent coupling of an inner glass and of an outer glass, and a related tray of stacked vinyl sheets, all transported within the apparatus itself and wherefrom the windshield exits completely assembled, ready for the subsequent assembly operation on the car.

The apparatus is provided with an autonomous air conditioning system, which maintains the PVB sheets in the proper thermo-hygrometric conditions for their employment even when the apparatus operates in a normal industrial environment. The existence of a conditioning system allows to reduce the clean space of the storage room for the PVB sheets and, consequently, to achieve a reduction in the cost of the related installation and operation step.

According to the invention, the apparatus comprises a series of integrated functional modules co-operating with each other, which means that the different manufacturing steps are completely synchronised.

An additional advantage is given by the fact that the entire apparatus can conveniently be tested before it is transported into a factory. Moreover, according to the present invention, the positioning and on site mounting of the apparatus can last at most 5 working days, from the time the goods are unpacked to the first effective production cycles, whilst similar prior art systems and apparatuses can be made operational only in more or less 13 work weeks.

Moreover, the apparatus of the present invention can easily be inserted in a pre-existing production, because it has considerable elasticity in its performance parameters, such as a vast tolerance in material supply, a vast range of glass formats and models, the possibility of different assembly characteristic, a limited technical idle time and the great efficiency of the product. By contrast, even expert human assemblers could barely reach such a level of efficiency, but they could not achieve the objectives so quickly at such a fast operating rate.

A detailed description shall now be provided of a preferred embodiment of the method and of the apparatus of the present invention, provided purely by way of non limiting example, with reference to the accompanying drawings in which:
Figure 1 is a schematic view of the apparatus of the present invention;
Figure 2 is a global perspective view from a side of the apparatus of the present invention;
Figure 3 is a global view, from another side, of the apparatus of the present invention;
Figures 4a through 4c schematically show the steps for assembling two glass panes and related PVB sheet to constitute a composite glass for a windshield;
Figure 5 is a view showing an automated head during the cutting of the excess PVB sheet from the edges of an assembled glass and according to the apparatus and the method of the present invention;
Figure 6 is a partially sectioned view which shows in detail the step of cutting a PVB sheet from the edges of the glass assembled with the apparatus of the present invention;
Figures 7a through 7c are schematic perspective views which partially show the automated head of Figure 5 for squaring the glass and according to the apparatus of the present invention; and
Figure 8 is a schematic perspective view which partially shows the PVB sheet cutting head of the apparatus of the present invention.

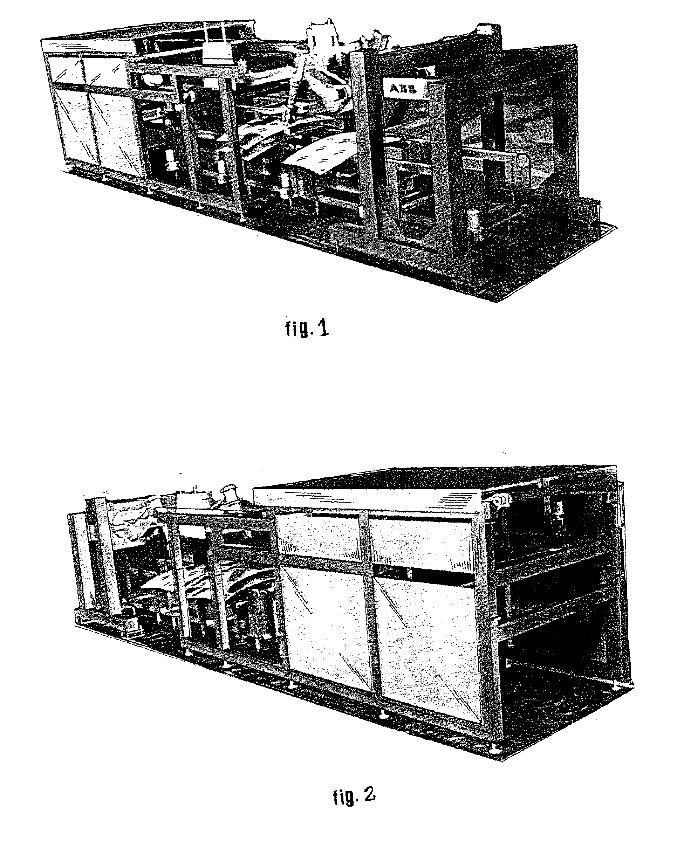

With reference not to Figures 1 and 2, the apparatus of the present invention is a compact apparatus for assembling composite glasses, which substantially consists of a set of automated cells which are physically closed in a stabilised hygro-thermostatic conduit (better illustrated below). The series of stations provides for the glass to be assembled, profiled and then delivered.

It must be immediately stressed that the total size of each automated cell makes the apparatus particularly suitable for shipping inside standard transport containers.

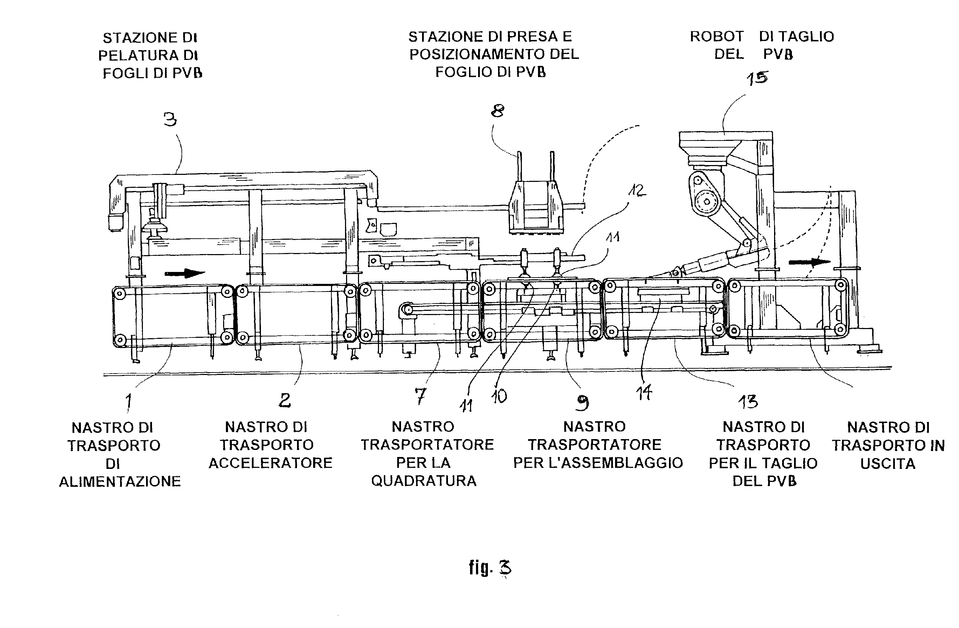

With reference now to Figure 3, the various stations constituting the cells are shown assembled according to the apparatus of the present invention. More specifically, the first station consists of a conveyor belt 1 in which the glass panes (i.e. the "inner glass" and the "outer glass") are loaded and are subsequently accelerated in a second station. A steel structure 3, positioned superiorly to the first station 1, houses a tray with the stacked PVB sheets (said tray is not shown herein).

The glasses can be loaded via rack, manual or automated, or by the feeding conveyor belt external to the apparatus (not in the figure). Typical velocities of the input line are between 10 and 20 metres/min, whilst the output velocity from the second station is increased to 60 metres/min. On the other hand, the trays filled with one or more stacks of PVB can be loaded manually or automatically via flow connection conveyors and be replaced periodically.

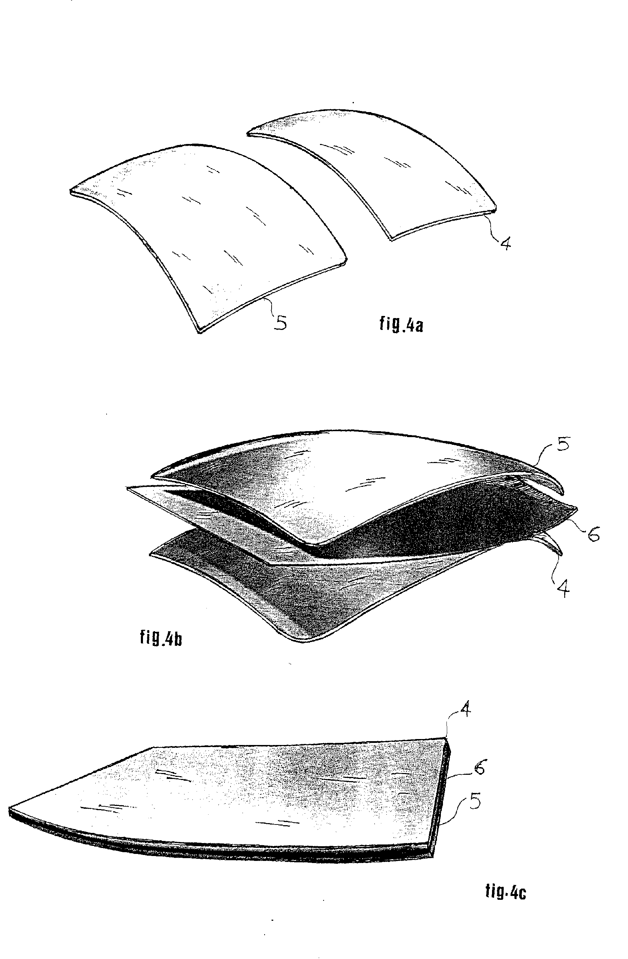

With particular reference to Figures 4a through 4c, the principle for the assembly of a composite glass according to the present invention is schematically shown therein. More specifically, two glasses 4 and 5 are fed horizontally, one after the other and both face down (with the wings downwards) on the conveyor belt 1. Additionally, a PVB sheet 6 is fed from the station 3. It must be noted immediately that the dimensions of the PVB sheet 6 must exceed those of the glasses 4 and 5, so that the PVB sheet, once positioned on the glasses, projects by several millimetres out of the peripheral edges.

Once the glasses 4 and 5 are coupled with the PVB sheet between them, a composite glass is obtained.

With reference again to Figure 1, a third station is provided which consists of a squaring, or rather a calibration station, in which both glass panes 4 and 5 are centred and aligned relative to a common reference so that the axes X, Y and the planar angle are fixed in a determined manner. Each glass pane 4 and 5 reaches the alignment station 7 at high speed, then is first slowed and lastly stopped by the conveyor belt of the station 7. In this condition, the alignment is performed by means of servo-controlled tools, which are particular but known in the prior art, and able to handle the product which is extremely fragile.

In any case, a rapid operation is assured as required by the high production rate. The apparatus according to the present invention guarantees an exactness in the absolute references of each glass pane 4 and 5 with an error of 0.5 millimetres.

In regard to the PVB sheet 6, once it is peeled from the stack in the station 3, it enters a gripping and positioning station 8 and after descent by means of detaching tools, it is positioned over a special belt. The determination of the position of the sheet according to the axes X and Y and its angling, as well as the detachment devices and the related applied technology, are comprised in a series of technologies which have already been covered by the patent application EP 1052206 A1 in the name of the present applicant and, therefore, their detailed description shall be omitted herein.

The two glass panes 5 and 5, after being aligned, are conveyed into the subsequent assembly station 9. The first glass pane 4 (i.e. the inner glass) is transferred by handling head 10 which moves forward within the conveyor belt line. The glass is gripped again by appropriate suction cups 11. The second pane 5 (the outer glass) is then transferred by an upper handling head 12, which moves below the PVB peeler machine and above the line of the conveyor belt 9. In this case, too, the glass is gripped by the suction cups 11.

Subsequently, the position of the PVB sheet 6 is corrected and the sheet is transferred over the convex surface of the inner glass 4. In this station, viewing systems are used for this purposes for sensing the position and actual orientation of the PVB sheet 6 before it is gripped and handled by an appropriate manipulator tool. The correction of the position and orientation of the PVB sheet 6 aims at centring the sheet 6 relative to the glass 4 according to the Y and X axes, and to orient it about said centre. The PVB sheet 6 is transferred by the belt onto the glass pane by a manipulator with four degrees of freedom which corrects the final position of the PVB sheet to combine the latter with the position of the glass 4 in the assembly station 9. This technology for the manipulation of the PVB sheet is also the subject of the patent application EP 1052206 A1 by the same applicant.

In this assembly station 9 a composite "sandwich" glass, comprising the two glass panes 4 and 5 and the PVB sheet 6 interposed between them, is assembled.

The assembly sequence is as follows:
- the inner glass 4 is released from the lower automated head 10 onto a suction cup support 11;
- the PVB sheet 6 is positioned on the convex face of the inner glass 4 by the manipulator;
- the outer glass 5 is released over the PVB sheet 6 from the upper automated head 11.

Since all components had been aligned previously, the maximum mounting error between the glass panes 4 and 5 is 0.5 millimetres in the radial direction relative to any point of the glass edge, whilst the maximum mounting error between the edge of the glass panes and the PVB sheet 6 is 3 millimetres.

At this point, the windshield thus assembled is conveyed towards the subsequent PVB cutting station 13 downstream. The windshield is transferred by an additional automated head 14, which performs an "exact" advancing motion relative to the initial position. This "exact" transfer of the windshield maintains all previous alignments obtained an maintained in the cutting station 13. All transfer movements of the automated heads are guided by controlled cycle motors to control the ends, the velocity and travel accelerations.

In said cutting station 13, the final finishing operation is performed, i.e. the part of the PVB sheet 6 projecting out of the edges of the assembled panes 4 and 5 is correctly cut off. The cut is performed by two automated heads 15 (whereof only one is shown in the figures), which are programmable according to different requirements/needs.

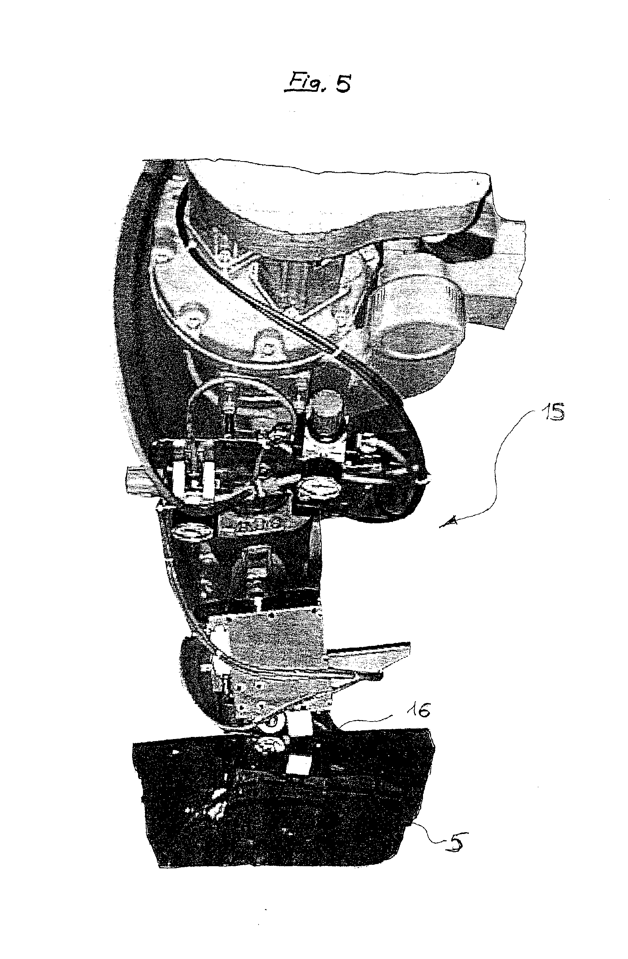

With reference to Figure 5, an arm is illustrated therein which comprises a programmable automated head 15. The automated head 15 is a 6-axis robot, and it is able to assure the necessary spaces between the glass and the edge of the PVB sheet as predetermined for each individual windshield model. Following the assembly of the composite glass, a predetermined minimal excess portion of PVB sheet is to be left along the entire profile of the glass edge, since further processes which follow (mainly sterilisation in an autoclave) usually entail a shrinking of the vinyl.

Moreover, it is possible to shave "down to zero" when there is no danger of shrinking or bending. For this purpose, a cutting head 16 is provided, mounted on the automated head 15 (better illustrated below).

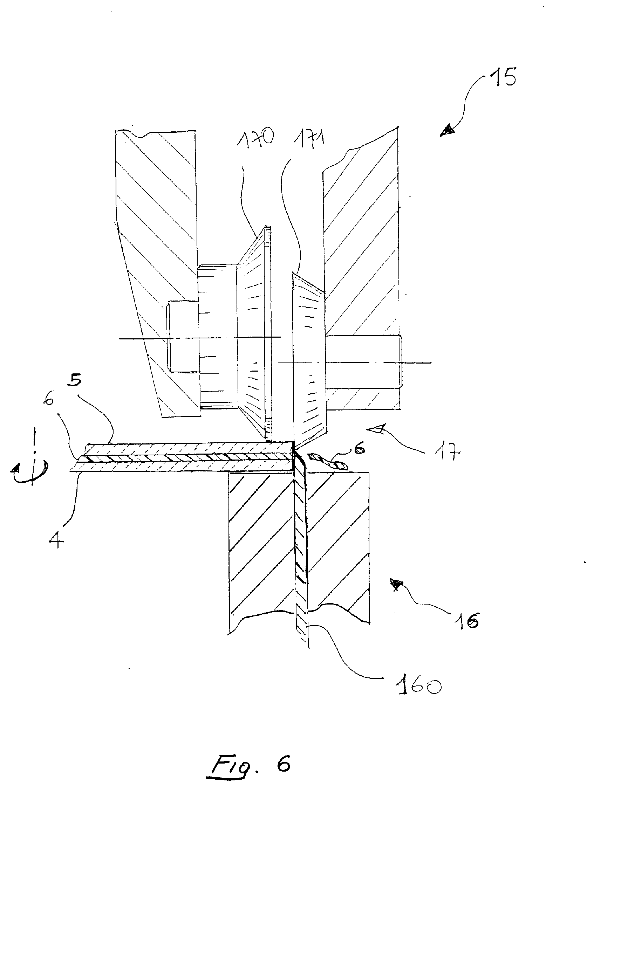

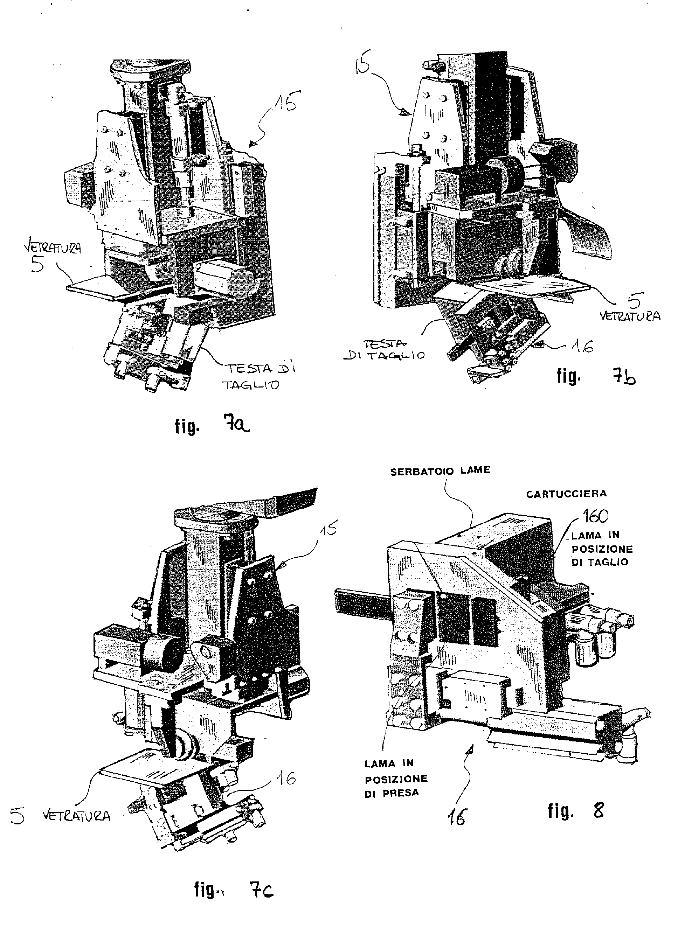

With reference not to Figures 6 through 8, the automated head 15 and the cutting head 16 of the apparatus of the present invention are shown therein.

More specifically, to leave the exact quantity of PVB sheet 6 projecting from the edge of the glass panes 4 and 5, an alignment region 17 is provided, mounted on the automated head and able to align the edges of the glass panes 4 and 5 relative to the PVB sheet 6. Once an edge point of the panes 4 and 5 contacts a pair of rotary cursors 170 and 171, the two automated heads 15 (whereof only one is shown in the figures) move peripherally, following the edge of the panes 4 and 5 in opposite positions, thereby calibrating the position of the panes relative to the PVB sheet 6 positioned between them and thereby leading a determined quantity of PVB sheet 6 projecting from the edges of the panes 4 and 5.

With particular reference to Figure 6, if the peripheral edge must be "shaved" down to zero (i.e. so that no part of PVB sheet 6 projects from the edge of the panes 4 and 5), a blade 160 projecting from the underlying cutting head 16 cuts the quantity of PVB sheet 6 projecting outwards whilst the automated head 15 advances. The final result is a composite glass free of excess PVB sheet 6 projections.

The composite glass thus obtained is then fed by means of a conveyor belt 18 to a subsequent station for assembling the glass outside the apparatus of the present invention.

The method and the apparatus of the present invention has innumerable advantage. A first advantage is provided by the extreme compactness of the apparatus, which makes it particularly suited to be transported in a single container.

Another advantage is given by the simplicity and, at the same time, by the high reliability of the apparatus which make it particularly advantageous in terms of employment and operating costs.

## Claims

1. A method for assembling a composite glass, **characterised in that** it comprises the following steps:
- feeding a pair of glass panes in a feeding station;
- accelerating said glass panes;
- precisely positioning said glass panes according to a reference station;
- feeding a sheet of plastic material on said glass panes from a plastic material sheet feeding station;
- assembling said composite glass positioning said plastic material sheet in calibrated fashion between said glass panes in a sandwich arrangement;
- conveying said glass thus assembled into a station for cutting the plastic material sheet;
- executing the peripheral cut of excess plastic material from the peripheral edges of the glass thus assembled; and
- feeding the glass thus processed towards a subsequent mounting station.

2. A method for assembling a composite glass as claimed in the previous claim, wherein said squaring step is performed by an automated head.

3. A method for assembling a composite glass as claimed in claim 1 or 2, wherein said cutting step is performed by means of an automated head.

4. A method for assembling a composite glass as claimed in any of the previous claims, further **characterised in that** it comprises a hygro-thermostatic control of at least a part of all the operative steps.

5. An apparatus for assembling a composite glass, **characterised in that** it comprises:
- a station for feeding a pair of glass panes;
- a station for accelerating said pair of glass panes;
- a station for the calibrated positioning of said glass panes according to a reference station;
- a station for feeding a sheet of plastic material on said glass panes;
- a station for assembling said composite glass, in which said sheet of plastic material is positioned in calibrated fashion between said glass panes in a sandwich arrangement;
- a station for cutting the excess plastic material sheet from the peripheral edges of said composite glass thus assembled; and
- a station for feeding the glass thus processed towards a subsequent station for its mounting.

6. An apparatus for assembling a composite glass as claimed in claim 5, wherein a hygro-thermostatic control of at least a part of all operative station is provided.

7. An apparatus for assembling a composite glass as claimed in claim 5 or 6, further comprising at least an automated head in at least an operative station.
